# EUROPEAN PATENT APPLICATION

(11) **EP 2 786 679 A1**
(43) Date of publication of application: **08.10.2014**
(21) Application number: 12852839.5
(22) Date of filing: 22.11.2012
(51) Int. Cl.: A47F 5/00, A47F 7/00, A47B 81/00

(54) **RACK FOR STORING AND EXHIBITING BALLS ON A COURT**

(30) Priority: 01.12.2011 ES 201131246 U
(71) Applicant: Puig Rofes, Jaime, 08110 (ES)
(72) Inventor: Puig Rofes, Jaime, 08110 (ES)
(74) Representative: Espiell Volart, Eduardo Maria
(86) International application number: PCT/ES2012/000288
(87) International publication number: WO 2013/079740

(57) **Abstract**

The rack -1- is moveable on wheels and has a locking cage enclosure -8-, the rack consists of a frame -2- with a front part -3- for moving it. On the frame -2-there are several vertical poles -4-, which have hoops -5-, with respective supporting arms -6-. The cage enclosure -8- consists of lateral stretches -10-, a rear front part - 11- and a top -12-, with its floor or base -8a- open, as well as its front part -8b which moves horizontally resting lower horizontal crossbars -9- on longitudinal side plates - 2a- of the frame -2-. The rack -1- may comprise a longitudinal crossbar -18-, wherein at the ends there are vertical poles -19- and -20- that support two longitudinal crossbars -21-, and on which hoops -22- are fixed by means of arms - 23-, further having supports -24- with wheels -25-. In the top part of the vertical foot - 20- there is a handlebar -26- and side bars -27-, parallel to each other. Its simplified cage -28- with feet -30- has the sides -28a-, top -28b- and rear front part -28c-closed, with only the front defined by vertical posts -29- being open. This simplified rack -1- presents a longitudinal crossbar -13-, provided with vertical poles -16- with hoops -17- and resting on supports -14- with wheels -15-, wherein the crossbar -13-has vertical poles -16- fixed to it and provided with hoops -17- for supporting the balls.

## Description

The present invention relates to a rack designed to store balls used in court sports, at the same time as to display them, leaving them not only within sight of the people near the rack, but also within sight of the sportsmen and sportswomen who will be able to pick them up for use in the game. The essential characteristics of the object of the present invention are described below.

### OBJECT OF THE INVENTION

As stated in the heading, the rack for the storage and display of balls has a dual purpose.

In the first place to provide a place for storing the aforesaid balls in an orderly manner and also securely, given that in the second place the rack presents, in addition to the modules on which the balls are placed individually, a total cage-like enclosure, which is installed when the rack is only used for storage, the cage remaining perfectly blocked, preventing access inside and, consequently, preventing the removal of any ball from the place by extraneous persons.

The locking cage enclosure once removed, allows the rack to present a series of balls, placed in an orderly fashion, visible for the people situated around the rack, allowing their distinguishing characteristics to be displayed in terms of appearance, currently commonplace, in respect of colouring, decoration and promotional graphics related to the sports clubs or sponsor organisations, among others. This special layout, also offers convenience for the players who will be able to pick up the balls with ease, as they will simply be resting on the corresponding hoop.

It must be pointed out that reference to "court balls" defines, specifically, the use of the rack as a device needed for court sports, and especially handball, basketball, indoor football and volleyball. This shall not limit the application and use of this invention, duly adapted, to field sports.

### CURRENT STATE OF THE ART

Currently, in the aforementioned court sports, balls are kept in cage-type containers or baskets which, although they adequately fulfil the functions of safe storage, because the baskets can be locked perfectly, do not allow the second of the previously described functions to be achieved, which is to allow the balls they contain to be displayed.

### CHARACTERISTICS OF THE INVENTION

The rack of the present invention presents as essential characteristics the fact that it is made up of a series of vertical poles fixed to a frame, each one provided with several horizontally suspended hoops, on which the balls are placed simply resting on the corresponding hoop.

Obviously, these hoops will all have a suitable diameter for the ball used in the court sport in question, in such a way that the ball, as already mentioned, is simply resting on the hoop.

As described, the set of vertical poles are fixed, in an appropriate manner and with a regular distribution, to a frame, moveable on wheels, provided, in general, with a vertical front part that facilitates pushing or pulling the rack.

The assembly is completed with a locking cage enclosure, which is installed enclosing the aforementioned rack, placing it in a longitudinal direction, introducing the rack through one end until it meets the vertical front part, over which it becomes blocked and locks, doing so at the same time over the frame itself, leaving it totally fixed and preventing access, meaning that the balls stored inside cannot be taken furtively.

The frame may present different variants of practical embodiment, always maintaining the essential characteristics, such as mobility, moving on its wheels, the arrangement, preferably on one of its front ends of the part suitable for pushing or pulling the assembly, and the total arrangement for placing, fixing and securing the locking cage enclosure on the frame.

As a variant embodiment, the locking cage enclosure may be presented open on one side, placed laterally over the rack and bringing down the side of the cage, previously lifted, in order to close the assembly, blocking and locking itself on the frame of the rack.

Also presented as a variant embodiment, regarding the vertical poles to which the horizontal loops are fixed, is the fact that the rack can have, instead of vertical poles, horizontal crossbars, situated longitudinally in the direction of the rack frame, fixed at their ends by respective vertical poles, wherein the hoops for placing the balls are fixed on the crossbars.

### GRAPHIC INFORMATION

With a view to completing the description above, drawings are attached which, by way of a practical non-limiting example, represent embodiments of the rack for the storage and display of court balls of this invention.

In said drawings,
- Figure 1: is a schematic view in perspective of a rack, provided with vertical poles and a series of hoops situated horizontally and fixed to said poles;
- Figure 2: also illustrates schematically and in perspective, a rack, according to the preceding figure, on which the locking cage enclosure is starting to be placed;
- Figure 3: is a schematic view in perspective of a rack provided with a simplified frame; and
- Finally, figure 4: also illustrates schematically and in perspective, a rack with a simplified structure and provided with horizontal longitudinal crossbars for fixing the sets of hoops, with the locking cage enclosure placed over it.

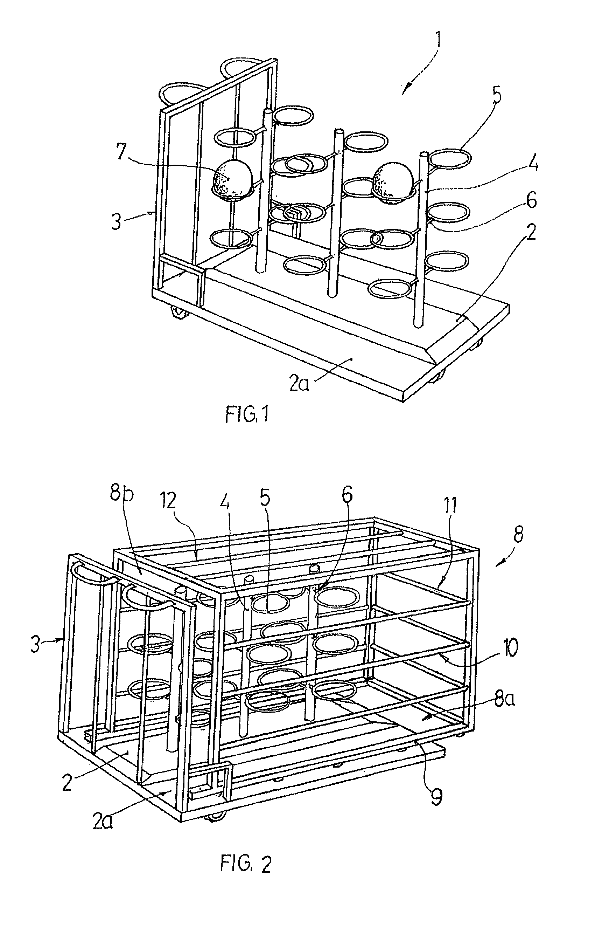

In accordance with these drawings, the rack -1- of the present invention essentially consists of a frame -2- moveable on wheels, provided, according to figures 1 and 2, with a front part -3- that facilitates the user's action to move it, while over the central part of its base several vertical poles -4- are situated, arranged in a regular and equidistant manner, three in the example of the drawing.

On each one of these vertical poles -4- there are several hoops -5- situated horizontally, each one fixed to the respective pole by means of a supporting arm -6-. The horizontal arrangement of each one of these hoops -5- allows a ball -7- to be placed on each one of them, the balls obviously having a greater diameter than the hoop, the ball being left in place, visible and within reach of the player who needs to take it.

The frame -2- of the rack illustrated as an example in figures 1 and 2 has two longitudinal side plates -2a- on which the lower horizontal crossbars -9- of the locking cage enclosure -8- rest, in such a way that the rack -1- is totally surrounded by the cage -8-, consisting of the sides -10-, the rear front part -11- and top -12-.

The cage thereby constituted, therefore possesses, its floor or base -8a-totally open, as well as its front part -8b-, allowing the cage to be installed enclosing the rack when moved horizontally, sliding over the side plates -2a- of the frame -2-until the open front end -8b- meets front end -3- of the rack, on which it blocks, through appropriate locks, preferably of a digital type, with no keys and/or padlocks, a fastening that is also carried out between the side crossbars -9- of the cage -8-and the side plates -2a- of the frame -2-.

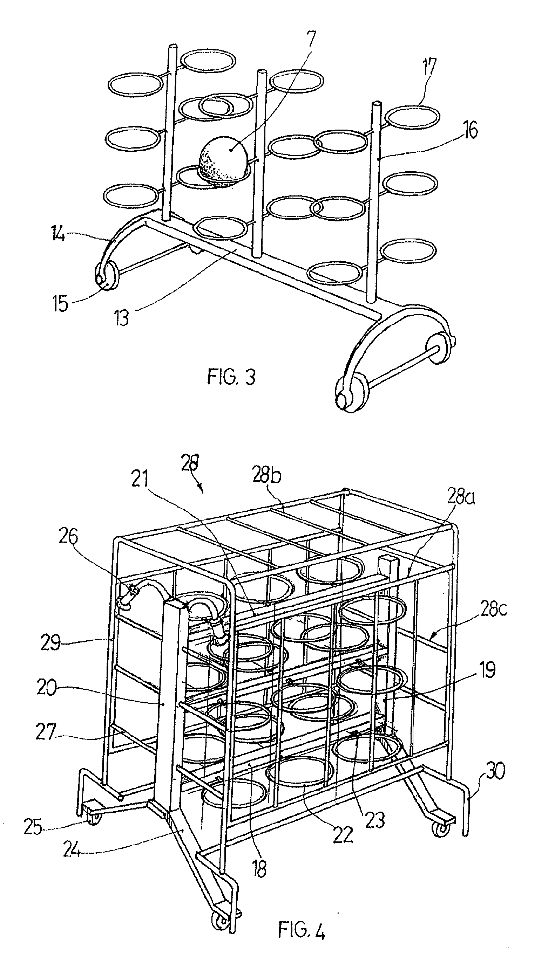

A simpler and more stylised frame, is represented in figure 3 as a variant practical embodiment, said frame consisting of just one longitudinal crossbar -13-resting on supports -14- for the two pairs of wheels -15- which allow the rack assembly to be moved. On the crossbar -13- vertical poles -16- are fixed on which the hoops -17- are fixed where the balls -7- are placed.

Also presented as another variant practical embodiment of the rack of the present invention, is the assembly drawn in figure 4, consisting of a frame, made up of a longitudinal crossbar -18-, at the ends of which there are two vertical poles -19-and -20-, which support, fixed to them, another two longitudinal crossbars -21-, parallel to each other and to the crossbar -18-. On these crossbars hoops -22- are fixed by the corresponding supporting arms -23-.

At the bottom part of each pole -19- and -20-, supports -24- for wheels -25-are fixed, allowing the rack assembly to be moved.

The rear pole -19- is simply a vertical element, whereas the front pole -20- is provided at its top part with a handlebar -26- suitable for the user to move the assembly and side bars -27-, symmetrical and parallel to each other, on the ends of which the vertical posts -29- of the locking cage enclosure -28- are rested, which are blocked by means of a suitable lock (not shown), thereby securing the aforesaid cage -28- around the rack.

This locking cage enclosure -28- has its sides -28a- closed as well as its top -28b- and rear front part -28c-, only having open the front part defined by the vertical posts -29-, in such a way that the cage is placed enclosing the rack, remaining fixed on the side bars -27- of the front pole -20- of the rack and directly rested on the ground by feet -30-.

Having sufficiently described the essential characteristics of the rack for the storage and display of court balls of the present invention, as well as different variants of practical embodiments, it must be stated that any variation in size, shape, appearance and finish, in addition to the types of materials employed in a practical embodiment of the rack, shall not in any way alter the essence thereof, hereby summarised in the following claims.

## Claims

1. Rack for the storage and display of court balls, **characterised in that** it consists of a rack -1- moveable on wheels and a locking cage enclosure -8-.

2. Rack for the storage and display of court balls according to claim 1, **characterised in that** the rack -1- consists of a frame -2- provided with a front part -3- to help with its moving.

3. Rack for the storage and display of court balls according to claim 2, **characterised in that** over the frame -2- there are various vertical poles -4-, placed in a regular manner, which have hoops -5-, fixed to the corresponding pole -4- by means of respective supporting arms -6-, on the hoops -5- of which the balls -7- are placed.

4. Rack for the storage and display of court balls according to claims 1 and 3, **characterised in that** the locking cage enclosure -8- consists of lateral stretches -10-, a rear front part -11- and a top -12-, with its floor or base -8a-open, as well as its front part -8b-, in such a way that the cage -8- can be installed enclosing the rack -1- moving horizontally supporting lower horizontal crossbars -9- on longitudinal side plates -2a- of the frame -2-.

5. Rack for the storage and display of court balls according to claims 1 and 4, **characterised in that** the locking cage enclosure -8- is fixed to the frame -2-of the rack -1- by means of suitable locks, preferably digital with no keys and/or padlocks.

6. Rack for the storage and display of court balls according to claims 1 and 2, **characterised in that** the rack -1- consists of a longitudinal crossbar -18-, which constitutes the frame of the assembly, at the ends of which there are respective vertical poles -19- and -20- which support between each other two longitudinal crossbars -21-, parallel to each other and to the frame -18- and on which hoops -22- are fixed by means of arms -23-, leaving situated beneath the vertical poles -19- and -20- supports -24- for appropriate transport wheels -25-.

7. Rack for the storage and display of court balls according to claim 6, **characterised in that** on the top part of the vertical pole -20- there is a handlebar -26- for facilitating the action of transport, and side bars -27-, symmetrical and parallel to each other.

8. Rack for the storage and display of court balls according to claims 6 and 7, **characterised in that** the locking cage enclosure -28- of the rack -1- has its sides -28a- closed, as well as its top -28b- and its rear front part -28c-, only having open the front part defined by vertical posts -29-, said cage -28-having feet -30- that rest directly on the ground when it is locked and blocked around the rack.

9. Rack for the storage and display of court balls according to claim 1, **characterised in that** the rack -1- consists of a longitudinal crossbar -13-, resting on supports -14- for two pairs of wheels -15-, the crossbar -13-having fixed to it vertical poles -16- on which the hoops -17- for supporting the balls are fixed.
